# EUROPEAN PATENT APPLICATION

(11) **EP 2 568 410 A2**
(43) Date of publication of application: **13.03.2013**
(21) Application number: 12183708.2
(22) Date of filing: 10.09.2012
(51) Int. Cl.: G06F 21/60, G06F 21/33

(54) **Printer server, printer control method, and storage medium**

(30) Priority: 12.09.2011 JP 2011198163
(71) Applicant: CANON KABUSHIKI KAISHA, Ohta-ku Tokyo 146-8501 (JP)
(72) Inventor: Takeda, Kyohei, Ohta-ku, Tokyo (JP)
(74) Representative: Garner, Jonathan Charles Stapleton

(57) **Abstract**

A system in an environment in which WSD is realized by employing SSL includes an authentication server (104) that stores a certificate group which permits printer creation and printing to avoid a risk of spoofing. The system uses a printer (105-108) having a certificate issued by an official certificate authority. In such a case, if verification on whether the certificate of the printer is included in the certificate group of the authentication server (104) is performed for all printers, there may be a printer which becomes unable to print, or in which the time for performing the verification becomes a waste, depending on the printer. A printer type is thus set when creating the printer, and if the printer has a certificate issued by the official certificate authority, a printer server (103) performs certificate authority (CA) verification with respect to the certificate.

## Description

### BACKGROUND OF THE INVENTION

### Field of the Invention

The present invention relates to a network printing system which performs secure printing on a printer via a network.

### Description of the Related Art

Conventionally, a user can perform printing from a client personal computer (PC) via a network on a printer connected to the network. In such a case, it is necessary for the client PC to detect the printer on the network, and then to install driver software for using the detected printer. A standard technique such as Web Services on Devices (WSD) previously proposed by Microsoft Corporation is a specification for performing the above-described series of processes in a simplified manner.

Further, secure WSD is a technique in which network data to be communicated using the WSD is encrypted. The secure WSD employs Secure Socket Layer (SSL) defined by Request For Comment (RFC) 2246.

The SSL encrypts the network data and prevents falsification and leakage of the network data. Further, the SSL performs certificate verification and thus prevents spoofing. In the case of performing certificate verification with respect to the printer, an official certificate authority (CA) signs the certificate to assure validity of the certificate. The CA certificate is stored in the client, and the certificate signed by the official CA is stored in the printer. The printer then transmits the certificate thereof to the client, and the client verifies the validity of the certificate.

However, it becomes necessary for the official certificate authority to sign the certificate to realize the above-described operation. As a result, cost and effort is required in performing the operation.

To solve such a problem, Japanese Patent Application Laid-Open No. 2007-323327 discusses an operation in which a self-signed certificate is used in the SSL, so that a configuration load of the above-described environment is reduced. In such an operation method, the self-signed certificate is stored in the printer.

### SUMMARY OF THE INVENTION

According to a first aspect of the present invention, there is provided a printer server as specified in claims 1 to 10. According to a second aspect of the present invention, there is provided a method as specified in claim 11. According to a third aspect of the present invention, there is provided a program as specified in claim 12. According to a fourth aspect of the present invention, there is provided a storage medium as specified in claim 13.

Further features and aspects of the present invention will become apparent from the following detailed description of embodiments with reference to the attached drawings.

### BRIEF DESCRIPTION OF THE DRAWINGS

The accompanying drawings, which are incorporated in and constitute a part of the specification, illustrate embodiments, features, and aspects of the invention and, together with the description, serve to explain the principles of the invention.

Fig. 1 illustrates a configuration of a network printing system according to an embodiment of the present invention.

Fig. 2 is a sequence diagram illustrating a process performed by the network printing system according to a conventional technique.

Fig. 3 illustrates an example of attribute information of a certificate.

Fig. 4 illustrates a hardware configuration of a printer server according to an embodiment of the present invention.

Fig. 5 is a software configuration of the printer server according to an embodiment of the present invention.

Fig. 6 illustrates a classification of printer types according to an embodiment of the present invention.

Fig. 7 is a sequence diagram illustrating a printer creation process according to first and third embodiments of the present invention.

Fig. 8 is a flowchart illustrating the printer creation process according to the first and third embodiments.

Fig. 9 illustrates a display example of the printers on a display device.

Fig. 10 is a sequence diagram illustrating a printing process performed by a certificate verification system-compatible printer having a self-signed certificate according to the first embodiment.

Fig. 11 is a flowchart illustrating the printing process according to the first and third embodiments.

Fig. 12 is a sequence diagram illustrating the printing process performed by a printer having a certificate issued by an official certificate authority and an SSL-WSD-compatible printer according to an embodiment of the present invention.

Fig. 13 is a sequence diagram illustrating the printing process performed by an SSL-incompatible printer according to an embodiment of the present invention.

Fig. 14 is a sequence diagram illustrating the printer creation process according to a second embodiment of the present invention.

Fig. 15 is a flowchart illustrating the printer creation process according to the second embodiment.

Fig. 16 is a sequence diagram illustrating the printing process performed by a certificate verification system-compatible printer having a self-signed certificate according to the second embodiment.

Fig. 17 is a flowchart illustrating the printing process according to the second embodiment.

Fig. 18 is a sequence diagram illustrating the printing process performed by a certificate verification system-compatible printer having a certificate issued by an official certificate authority according to the third embodiment.

Fig. 19 illustrates a management table of the printer types in the printer server.

Figs. 20A and 20B illustrate warnings displayed when the SSL-WSD compatible printer and the SSL-incompatible printer perform printing, respectively.

Figs. 21A is a sequence diagram and Fig. 21B is a flowchart illustrating the process performed when the SSL-WSD-compatible printer displays the warning.

### DESCRIPTION OF THE EMBODIMENTS

Various embodiments, features, and aspects of the invention will be described in detail below with reference to the drawings.

If there is no SSL certificate on the client side with which the validity of the certificate transmitted from the server can be verified, the client cannot verify the validity. It is thus previously determined whether to continue the process even when the verification cannot be performed on the client side, or the user is caused to select whether to continue the process when the certificate is received. In either case, when the process is to be continued, it indicates that the server authentication has not been performed, so that there is a risk of spoofing.

In other words, if the SSL uses the self-signed certificate, the operation cost and effort can be reduced. However, there is a risk of spoofing.

The network printing system for avoiding the above-described risk of spoofing when using the self-signed certificate, and the problem arising in the network printing system will be described below.

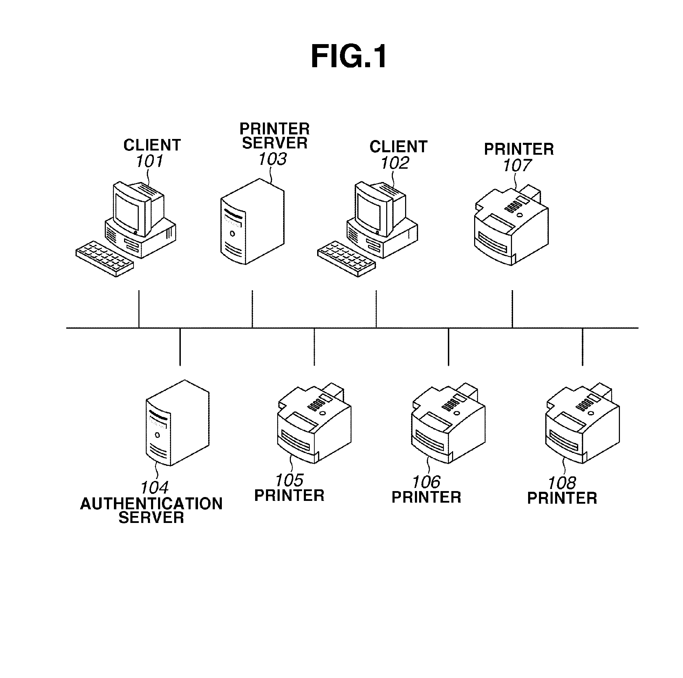

Referring to Fig. 1, the client network printing system includes clients 101 and 102, a printer server 103, an authentication server 104, and printers 105, 106, 107, and 108.

There may be more than two clients and more than four printers. Hereinafter, the client 101 and the printer 105 will represent each of the clients and the printers, respectively. The printer server and the authentication server may be physically separate apparatuses as illustrated in Fig. 1, or functions of the printer server and the authentication server may be included in one apparatus.

The authentication server 104 manages the network printing system illustrated in Fig. 1. Further, each device in the network printing system cannot connect to a network environment without permission from the authentication server 104.

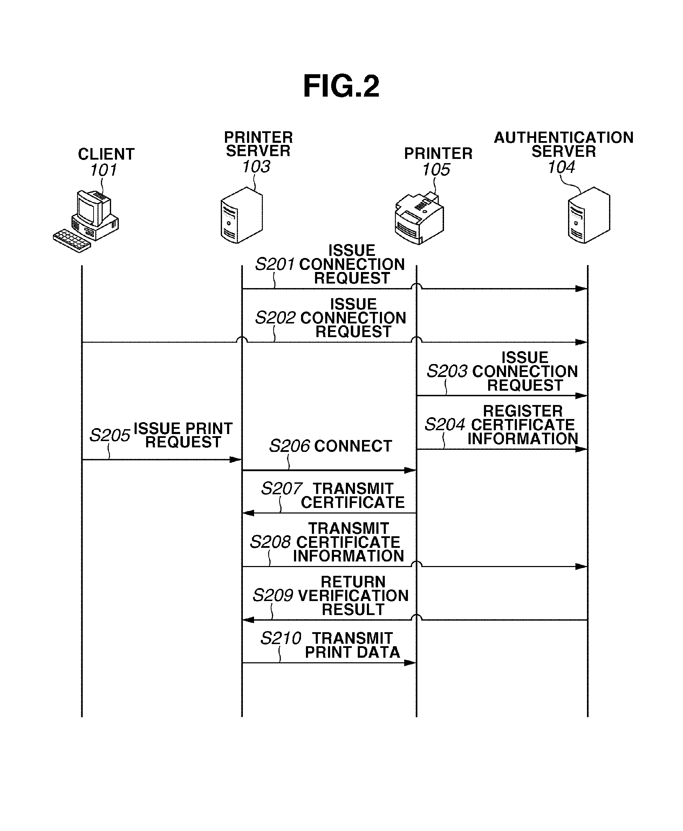

Fig. 2 is a sequence diagram illustrating a process for verifying the validity of the self-signed certificate and performing printing in the network printing system.

Referring to Fig. 2, it is assumed that the client 101 has previously created the printer 105 via the printer server 103. More specifically, the driver software of the printer 105 is installed in the client 101, and the printer 105 is in a operational state.

In step S201, the printer server 103 uses a network authentication protocol to request connecting to the network environment managed by the authentication server 104. If there is a response from the authentication server 104 permitting the connection, the printer server 103 becomes capable of connecting to the network environment.

In step S202, the client 101 also connects to the network environment using the same authentication unit.

In step S203, the printer 105 connects to the network environment using the same authentication unit.

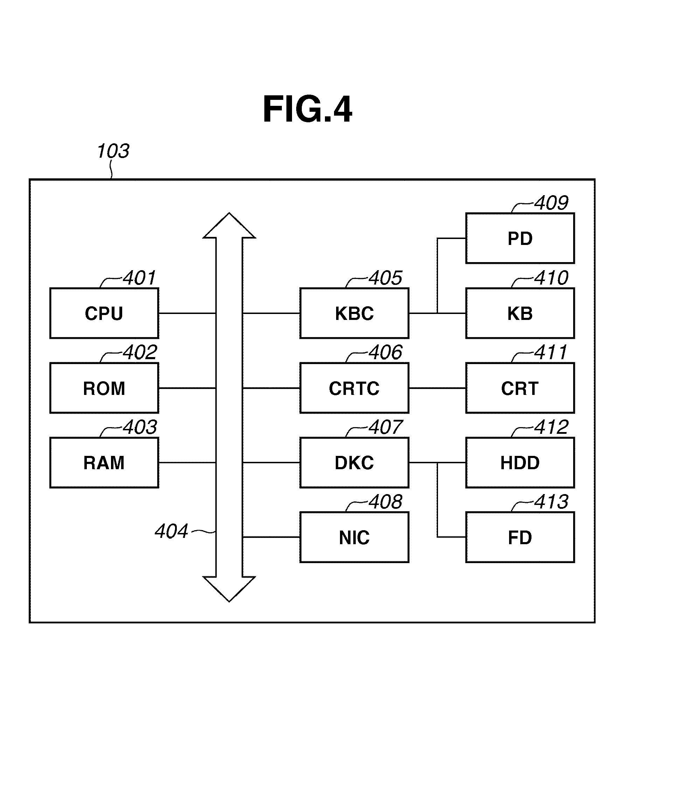

In step S204, upon connecting to the network environment, the printer 105 registers in the authentication server 104, certificate information to be used in the secure WSD. The authentication server 104 thus stores in a hard disk drive (HDD) 412 (illustrated in Fig. 4 to be described below) the registered certificate information. When a plurality of certificate information with respect to the certificates is registered, a certificate group, which is a group of certificates whose authentication has been actually permitted, is configured.

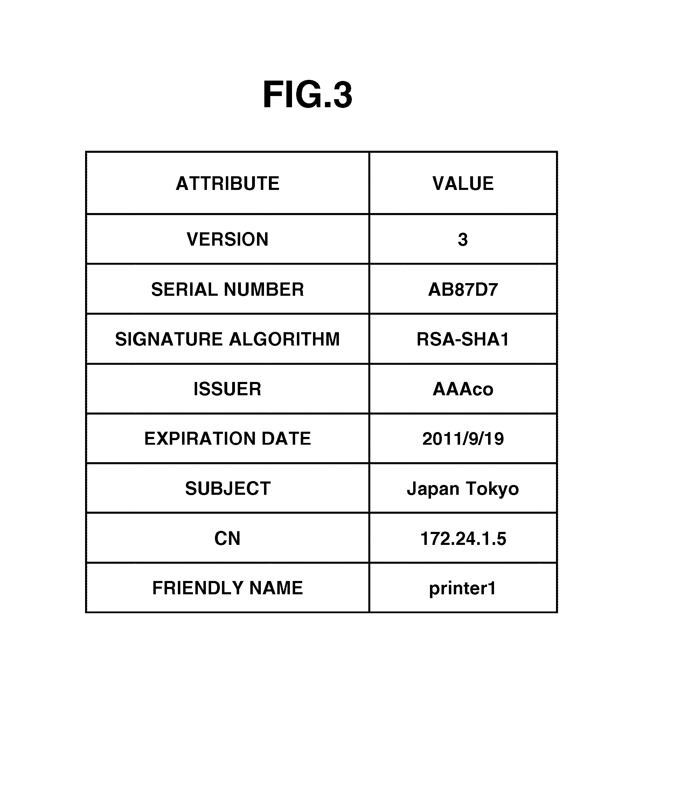

The certificate information is information on the certificate, and includes attribute information as illustrated in Fig. 3.

In step S205 illustrated in Fig. 2, the user instructs printing, so that the client 101 executes printing on the printer which has been previously created. If printing is to be executed, the client 101 transmits the print request to the printer server 103 instead of directly transmitting the print request to the printer 105. A communication protocol used between the client 101 and the printer server 103 may be Bonjour or universal plug and play (UPnP) instead of WSD. The case where the communication protocol is WSD will be described below.

According to the present embodiment, the print request includes the information indicating the printer which is used to perform printing, the print data, and print setting information.

According to the present embodiment, the client 101 transmits to the printer server 103 the print data generated by performing rendering. However, the client 101 may transmit to the printer server 103 the information necessary for performing rendering, and the printer server 103 may perform rendering.

In step S206, upon receiving the print request from the client 101, the printer server 103 connects to the printer 105. More specifically, an SSL session is established to connect to the printer 105.

In step S207, the printer 105 transmits to the printer server 103 the self-signed certificate to be used in the SSL.

In step S208, the printer server 103 performs a certificate verification process to determine whether the received certificate is reliable. The printer server 103 thus acquires the certificate information from the certificate, and transmits the acquired certificate information to the authentication server 104.

In step S209, the authentication server 104 verifies whether the received certificate information matches the certificate information registered therein. The authentication server 104 then transmits the verification result to the printer server 103 as a response.

If the certificate information is the attribute information, the authentication server 104 performs verification by determining whether the attribute information in the received certificate information matches the attribute information in the registered certificate information. If the certificate information is the hash information, the authentication server 104 performs verification by determining whether the hash information in the received certificate information matches the hash information in the registered certificate information.

If verification is successful, in step S210, the printer server 103 determines that the printer 105 is a reliable terminal and continues to communicate, so that the printer server 103 transmits the print data to the printer 105. If the verification has failed, the printer server 103 determines that the printer 105 is an unreliable terminal, and stops communicating.

According to the present embodiment, the printing system uses the SSL and thus encrypts a communication path to deal with leakage and falsification. Further, according to the present embodiment, the printing system employs the authentication server to perform certificate verification, so that the risk of spoofing can be avoided.

Hereinafter, the system which verifies the certificate and performs printing according to the procedure illustrated in Fig. 2 will be referred to as a certificate verification system. According to the present embodiment, the printer 105 in the certificate verification system includes a function to register the certificate information in the authentication server 104, in addition to the secure WSD function. Further, the printer server 103 in the certificate verification system includes a function to cause the authentication server 104 to perform the certificate verification process after the printer server 103 receives the certification information from the printer 105. Furthermore, the authentication server 104 in the certificate verification system includes a function to receive registration of the certificate information, store the certificate information, and verify the validity of the certificate on request.

In step S208 of the procedure performed by the above-described certificate verification system, the printer server 103 transmits to the authentication server 104 the certificate information for verifying whether the received certificate is reliable. However, if the certificate received by the printer server 103 is a certificate issued by an official certificate authority, verification can be performed using the CA certificate in the printer server 103. It is thus unnecessary for the authentication server 104 to perform verification.

If the authentication server 104 verifies the received certificate information even in the above-described case, the authentication server 104 sequentially verifies each piece of the certificate information. Time required for performing the verification thus becomes longer as the number of certificate information increases. The results are the same regardless of whether the certificate information is the attribute information, or is the hash of the certificate.

Further, according to the present embodiment, the authentication server in the network printing system does not support a printer which is SSL-incompatible. Furthermore, the authentication server does not support a printer which is certificate verification system-incompatible and having a certificate issued by an official certificate authority or a self-assigned certificate. Such printers thus cannot connect to the network environment. Even if the printers are allowed to connect to the network environment, such printers do not include a certificate or cannot register the certificate information in the authentication server 104. In other words, if the printer is SSL-incompatible, the authentication server cannot verify the certificate. As a result, if such a printer is to be processed according to the same procedure as the above-described network printing system, the certificate cannot be verified and printing cannot be performed.

According to a first embodiment of the present invention, the present invention is applied to the authentication server 104 to solve the above-described problem.

The configuration of the network printing system will be described below with reference to Fig. 1.

Further, according to the present embodiment, an Active Directory (AD) Server is employed as the authentication server 104, and an Active Directory (AD) environment will be employed as the network environment. Furthermore, according to the present embodiment, each device in the network printing system can connect to the network environment even if the authentication server 104 has not performed the authentication.

As described above, according to the present embodiment, the AD Server is employed as the authentication server 104. However, the authentication server 104 may be a Radius authentication server.

According to the present embodiment, the network printing system includes the clients 101 and 102, the printer server 103, the authentication server 104, and the printers 105, 106, 107, and 108. There may be more than two clients and more than four printers. Hereinafter, the client 101 and the printer 105 will represent each of the clients and the printers respectively. The printer server and the authentication server may be physically separate apparatuses as illustrated in Fig. 1, or functions of the printer server and the authentication server may be included in one apparatus.

Fig. 4 is a block diagram illustrating the hardware configuration of the printer server 103.

Referring to Fig. 4, a central processing unit (CPU) 401 controls the various devices connected to a system bus 404. A read-only memory (ROM) 402 stores basic input/output system (BIOS) and boot programs, and a random access memory (RAM) 403 is used as a main storage device for the CPU 401. A keyboard controller (KBC) 405 performs the processes for inputting information from a pointing device (PD) 409, e.g., a mouse, and a keyboard (KB) 410. A display control unit (CRTC) 406, which includes a video memory therein, draws image data in the video memory according to an instruction from the CPU 401 and outputs to a cathode ray tube (CRT) display device 411 as a video signal the image data drawn in the video memory.

The CRT is illustrated as an example of the display device in Fig. 4. However, any display device may be used, such as a liquid crystal display device.

A disk controller (DKC) 407 is used for accessing the HDD 412 and a floppy disk (FD) 413. A network interface card (NIC) 408 is used for connecting to the network and communicating information via the network. The HDD 412 stores an operating system (OS) and various application programs which run on the OS.

If the user switches on the above-described printer server 103, the CPU 401 reads the OS from the HDD 412 to the RAM 403 according to the boot program stored in the ROM 402, and thus functions as an information processing apparatus.

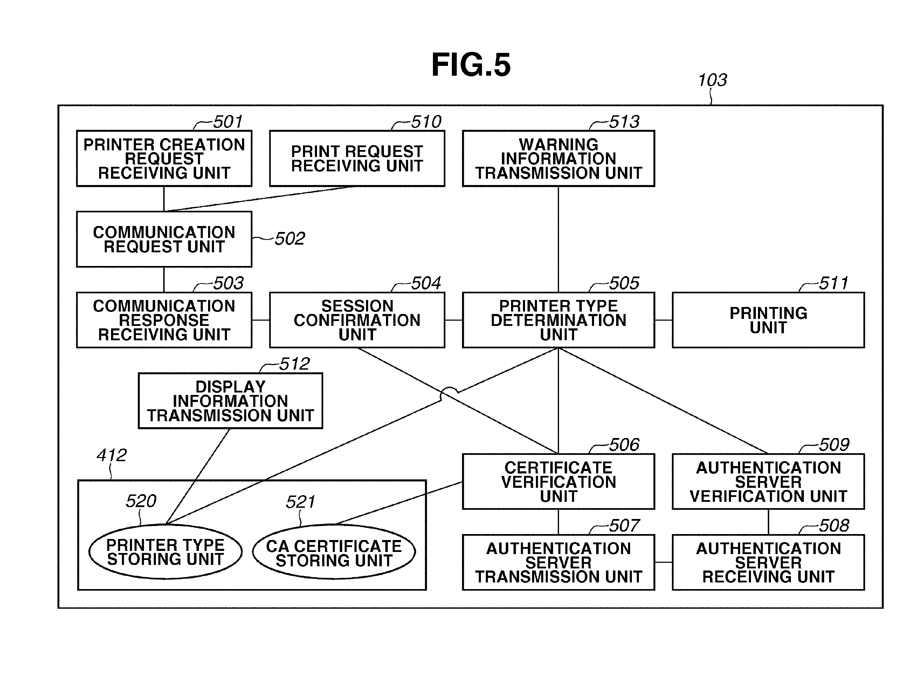

Further, the CPU 401 performs the processes based on the programs stored in the HDD 412, so that the software configuration of the printer server 103 illustrated in Fig. 5 and the processes of each step in the flowcharts to be described below are realized.

Fig. 5 is a block diagram illustrating the software configuration of the printer server 103.

Referring to Fig. 5, a printer creation request receiving unit 501 performs, when newly receiving a printer creation request from the client, control for receiving the printer creation request. A communication request unit 502 requests the printer to start communication. A communication response receiving unit 503 performs control of receiving the certificate transmitted from the printer. A session confirmation unit 504 confirms whether the SSL session is established between the printer server 103 and the printer 105. A printer type determination unit 505 determines the printer type from the functions of the printer, and stores the printer type in a printer type storing unit 520. A certificate verification unit 506 verifies whether the certificate received from the printer is a reliable certificate.

An authentication server transmission unit 507 transmits the certificate to the authentication server 104 for verifying the certificate. An authentication server receiving unit 508 performs control of receiving the verification result from the authentication server 104. An authentication server verification unit 509 determines whether the received result indicates that the verification has been successful or unsuccessful. A print request receiving unit 510 performs control of receiving a print request from the client. A printing unit 511 executes printing on the printer 105.

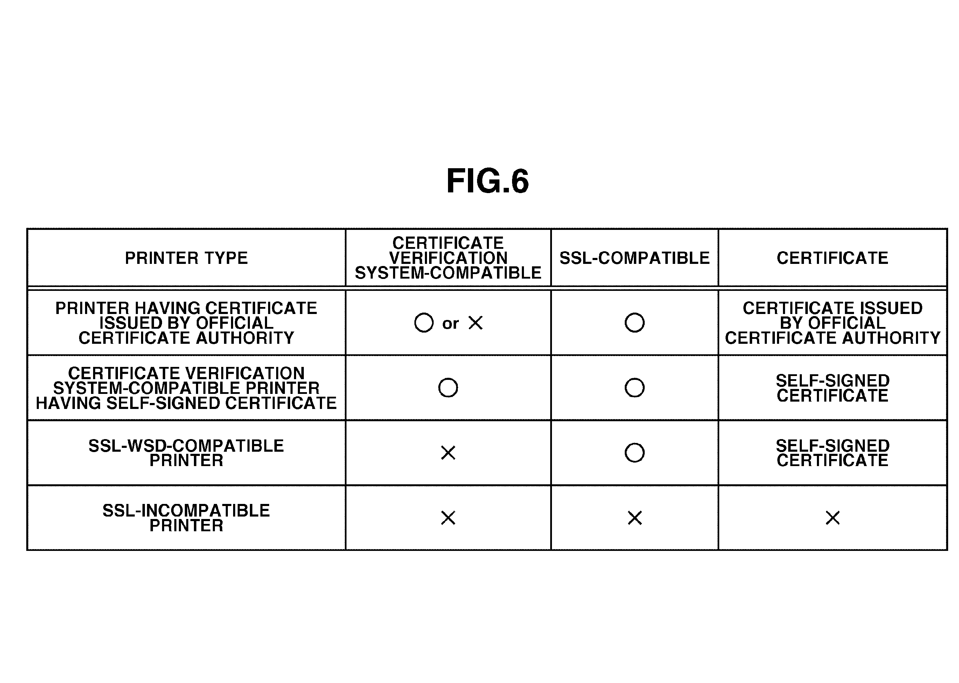

A flow of the process for creating the printer performed in the network printing system will be described below. According to the present embodiment, when the printer is to be created, the printer types are classified according to the functions of the printer. The printers are classified into four types as illustrated in Fig. 6.

Referring to Fig. 6, a printer having a certificate issued from an official certificate authority indicates a printer which performs SSL communication using the certificate issued by an official certificate authority. If the printer stores a certificate issued from an official certificate authority, the client can perform verification using the CA certificate stored therein, and it becomes unnecessary for the authentication server to verify the certificate. Such a printer is thus referred to by the above-described name regardless of the printer being certificate verification system-compatible or certificate verification system-incompatible. Further, the certificate stored in the printer having a certificate issued from an official certificate authority may be a certificate issued by an independent authentication authority built in the network environment. It is thus assumed that the printer having a certificate issued from an official certificate authority stores the certificate issued by a public or a private authentication authority.

A certificate verification system-compatible printer having a self-signed certificate is a certificate verification system-compatible printer which performs SSL communication using a self-signed certificate. Such a printer includes the function to register the certificate information in the authentication server. The printer may include the function to register the certificate instead of the certificate information to be described below.

The self-signed certificate is a certificate which is not issued by an official certificate authority.

The SSL-WSD-compatible printer is a certificate verification system-incompatible printer which performs SSL communication using a self-signed certificate.

A SSL-incompatible printer is a printer which is not SSL-compatible and communicates using plain text.

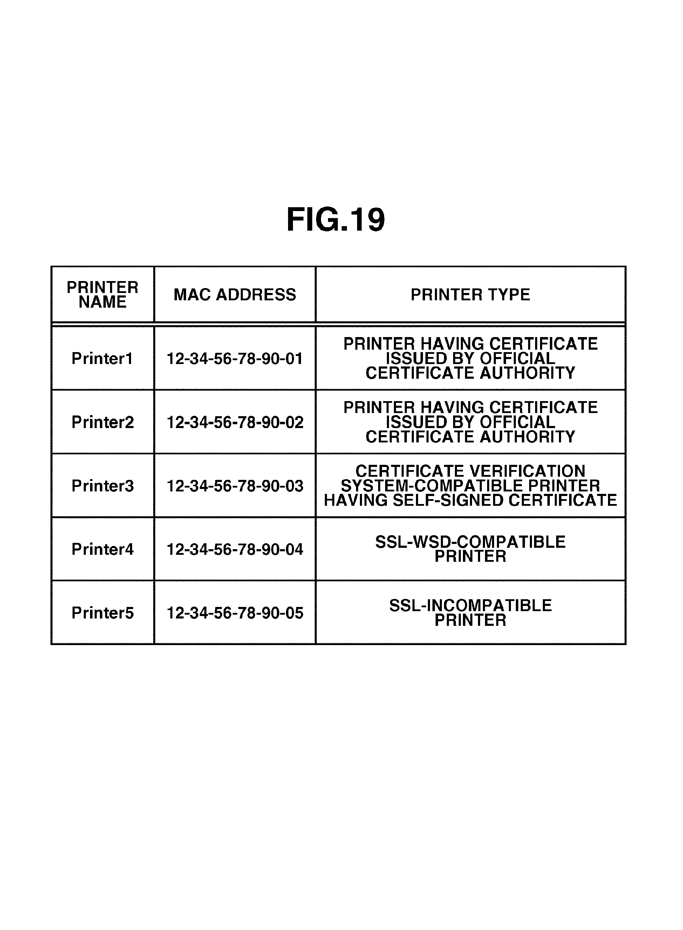

The printer type determination unit 505 illustrated in Fig. 5 associates the printer with one of the printer types and manages the printers using a table illustrated in Fig. 19.

Referring to Fig. 19, a printer name and a media access control (MAC) address are included as examples of the information for uniquely identifying the printer (hereinafter referred to as printer unique information). Other types of printer unique information include a fixed Internet protocol (IP) address, or storing in the printer a file in which the unique information of the printer is described.

When the printer server 103 initially communicates with the printer 105, the printer server 103 acquires the printer unique information from the printer 105.

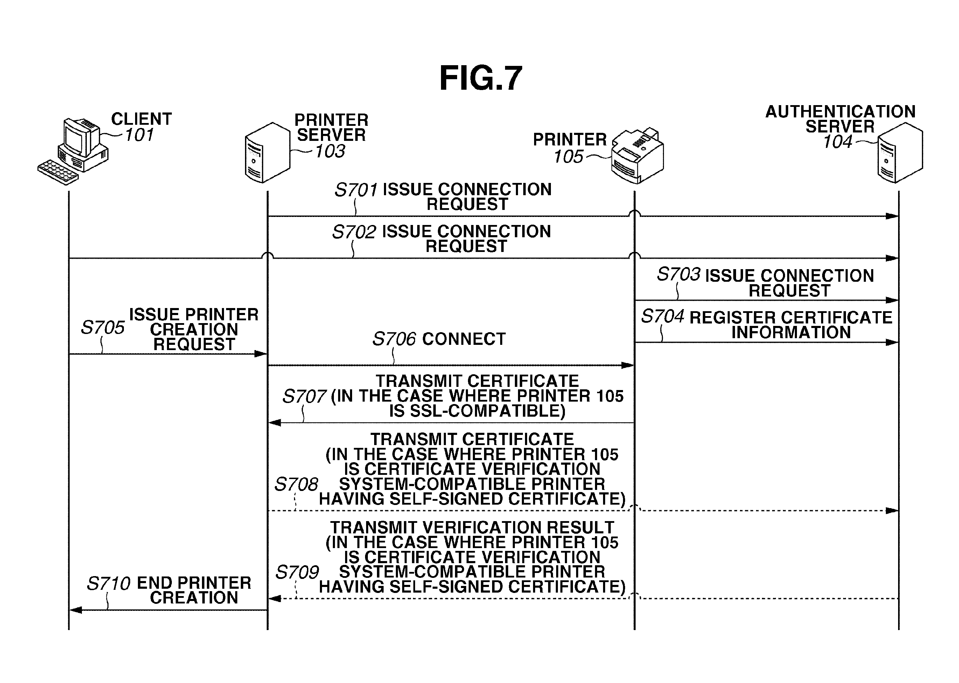

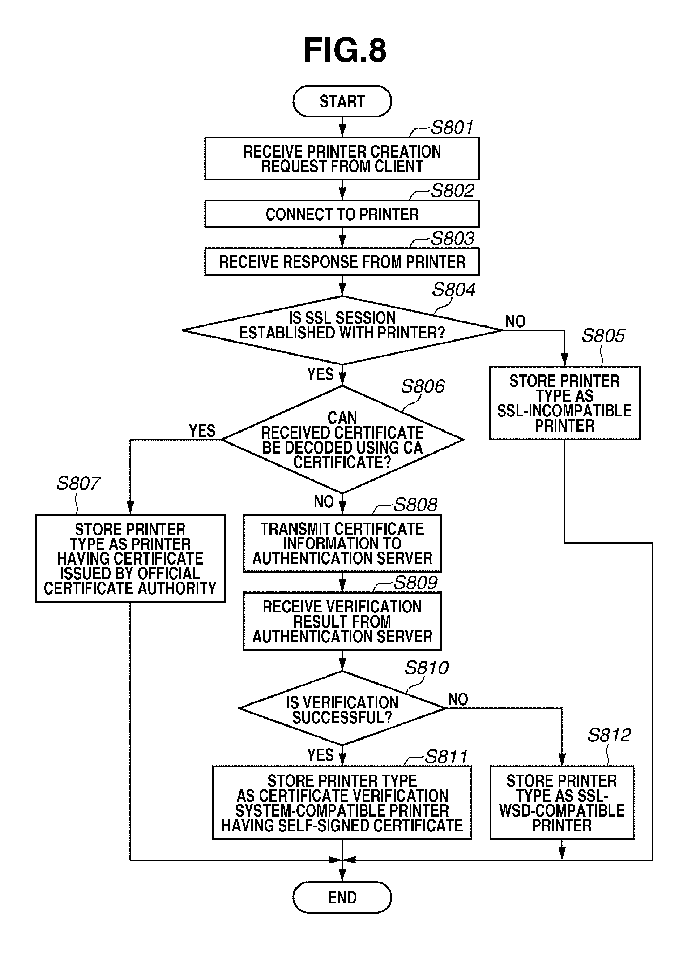

Fig. 7 is a sequence diagram illustrating the process for creating the printer performed in the network printing system. Fig. 8 is a flowchart illustrating internal processing performed by the printer server 103 when creating the printer. According to the present embodiment, the client 101 and the printer server 103 in the examples illustrated in Figs. 7 and 8 are certificate verification system-compatible and capable of logging into the AD environment.

In step S701 illustrated in Fig. 7, the printer server 103 logs into the AD environment. The printer server 103 logs in using the network verification protocol such as Kerberos. In step S702, the client 101 similarly logs into the AD environment, and in step S703, the printer 105 similarly logs into the AD environment. If the printer 105 is certificate verification system-incompatible, the printer 105 cannot log into the AD environment.

Even in such a case, the processes from step S705 and thereafter are continuously performed. In step S704, upon logging into the AD environment, the printer 105 registers in the authentication server 104 the certification information to be used in the secure WSD.

The certificate information may include the attribute information as illustrated in Fig. 3, the hash information of the certificate, or the file of the certificate. In other words, the certificate information may be stored in any form as long as the certificate can be uniquely identified and verified.

The certificate information may include attributes such as an authority key identifier or a certificate revocation list (CRL) distribution point other than those illustrated in Fig. 3. Further, since the file data size increases as the number of attribute information increases, the certificate information may employ the information for uniquely identifying the certificate, such as the hash information of the certificate.

The printer 105 may also register in the authentication server 104 the certificate instead of the certificate information, so that the authentication server 104 performs verification by comparing the certificates. The example in which verification is performed using the certificate information will be described below.

In step S705, if the user requests printer creation, the client 101 transmits the printer creation request to the printer server 103. The printer creation request includes the information indicating the printer to be created.

In step S706, upon receiving the printer creation request from the client 101, the printer server 103 connects to the printer 105.

The process performed in the printer server 103 illustrated in the flowchart of Fig. 8 which corresponds to the process of step S706 is as follows. In step S801, the printer creation request receiving unit 501 receives the printer creation request from the client 101. In step S802, the communication request unit 502 transmits to the printer 105 the printer creation request using the secure WSD. Since the SSL-incompatible printer does not support the SSL connection, the SSL-incompatible printer fails to connect.

In step S707 illustrated in Fig. 7, the printer 105 responds and connects to the printer server 103. More specifically, the three types of printers excluding the SSL-incompatible printer transmit to the printer server 103 the certificate to be used in the secure WSD, and the printer server 103 receives the certificate.

The process performed in the printer server 103 corresponding to the process of step S707 is as follows. In step S803 illustrated in Fig. 8, the communication response receiving unit 503 receives the response from the printer 105.

In step S804, the session confirmation unit 504 determines whether the SSL session is established when the communication response receiving unit 503 receives the response from the printer 105.

If the SSL session is not established between the printer server 103 and the printer 105 (NO in step S804), the process proceeds to step S805. In step S805, the printer type determination unit 505 stores in the printer type storing unit 520 in the HDD 412 that the printer type of the printer is the SSL-incompatible printer.

If the SSL session is established between the printer server 103 and the printer 105 (YES in step S804), the certificate is included in the received result of the communication response receiving unit 503. The process then proceeds to step S806. In step S806, the certificate verification unit 506 sequentially reads the CA certificate thereof stored in the CA certificate storing unit 521 in the HDD 412. The certificate verification unit 506 then confirms whether the certificate received from the printer 105 can be decoded using the CA certificate.

If the certificate received from the printer 105 can be decoded (YES in step S806), the process proceeds to step 807. In step S807, the printer type determination unit 505 stores in the printer type storing unit 520 in the HDD 412 the printer type of the printer as a printer having a certificate issued by an official certificate authority.

If the certificate received from the printer 105 cannot be decoded (NO in step S806), the process proceeds to step S808. In step S708 illustrated in Fig. 7, the printer server 103 transmits to the authentication server 104 the certification information for the authentication server 104 to refer to in verifying whether the received certificate is reliable.

In step S709, the authentication server 104 verifies whether the received certificate information matches one of the certificate information registered therein, and transmits the verification result to the printer server 103 as the response. More specifically, the authentication server 104 sequentially determines whether the registered certificate information matches the received certificate information for all of the registered certificate information. As a result, the authentication server 104 verifies whether the received certificate is included in the certificate group.

The processes performed in the printer server 103 corresponding to the processes performed in step S707 and step S708 are as follows. In step S808 illustrated in Fig. 8, the authentication server transmission unit 507 transmits to the authentication server 104 the certificate information for verifying whether the received certificate is reliable.

In step S809, the authentication server receiving unit 508 receives the result of verifying whether the certificate information received by the authentication server 104 matches the certificate information registered in the authentication server 104.

In step S810, the authentication server verification unit 509 confirms the result received in step S809. If verification is successful (YES in step S810), the process proceeds to step S811. In step S811, the printer type determination unit 505 stores in the printer type storing unit 520 in the HDD 412 the printer type of the printer as the certificate verification system-compatible printer having a self-signed certificate. If the verification has failed (NO in step S810), the process proceeds to step S812. In step S812, the printer type determination unit 505 stores in the printer type storing unit 520 in the HDD 412 the printer type of the printer as the SSL-WSD-compatible printer.

The case where the user confirms the created printer on the display device will be described below.

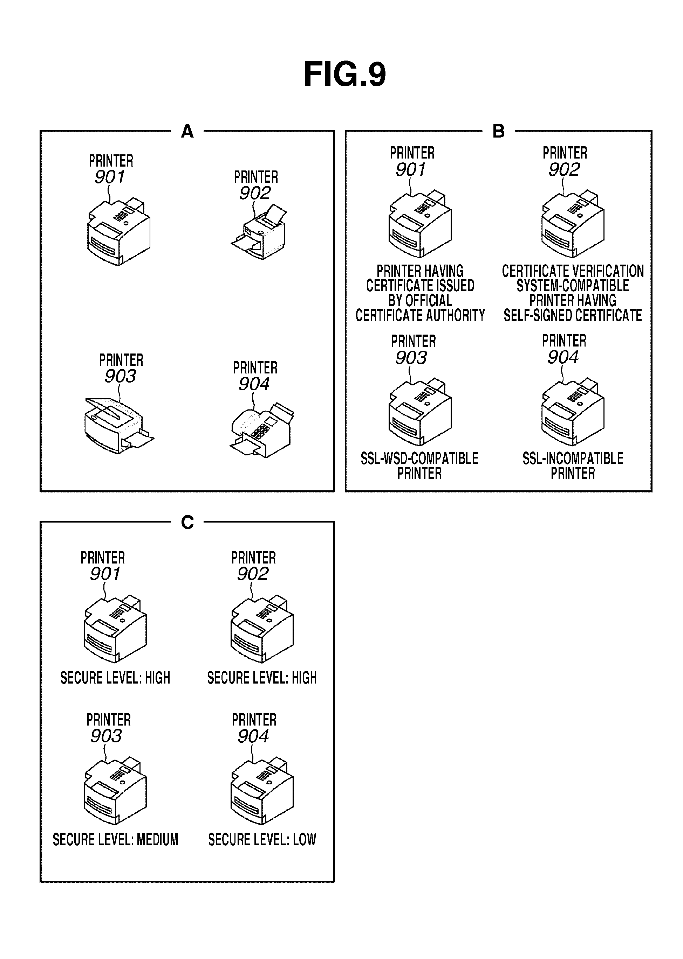

If the printer server 103 is to display the created printers, a display information transmission unit 512 illustrated in Fig. 5 acquires the printer types form the data stored in the printer type storing unit 520 in the HDD 412 and transmits to the RAM 403 the information needed for displaying the created printers as illustrated in Fig. 9. The printer server 103 then displays accordingly on the CRT display device 411.

If the client 101 is to display the created printers, the client 101 receives a printer creation completion notice generated in step S710 illustrated in Fig. 7. The client 101 then inquires the display information transmission unit 512 in the printer server 103 on the printer types. The printer server 103 acquires the data stored in the printer type storing unit 520 in the HDD 412 and transmits the result to the client 101. The client 101 thus acquires the information for displaying the created printers as illustrated in Fig. 9.

Referring to Fig. 9, when the user views the displayed printers on the CRT display device or the display device of the client 101, the operation unit is displayed differently depending on the created printer type. The operation unit is an area in which the user can operate on a print setting of the printer or displaying of a print job using the pointing device.

A printer 901 indicates the printer having a certificate issued by an official certificate authority. A printer 902 indicates the certificate verification system-compatible printer having a self-signed certificate. A printer 903 indicates the SSL-WSD-compatible printer. A printer 904 indicates the SSL-incompatible printer.

In an area A illustrated in Fig. 9, the printers are displayed using icons to indicate that each printer is of a different type. The icons used in Fig. 9 are examples and are not limited to those which are illustrated.

In an area B, the printer name and the printer type are displayed to indicate that each printer is of a different type. The display of the printer types is an example, and the printer types may also be displayed in a property display.

In an area C, the printer name and the secure level are displayed by setting the secure level to each printer type. The display of the secure level is an example, and the secure level may also be displayed in the property display. Further, the secure level is determined as follows. A low secure level is set to the SSL-incompatible printer which is not implementing security measures such as encryption using the SSL. A middle secure level is set to the SSL-WSD-compatible printer which performs encryption using the SSL and thus prevents falsification and leakage. A high secure level is set to the certificate verification system-compatible printer having a self-signed certificate and the printer having a certificate issued by an official certificate authority, which perform verification of the certificate to prevent spoofing, in addition performing encryption.

The printing process performed by the network printing system according to the present embodiment will be described below. When the network printing system performs printing, the system operates according to the printer type identified in creating the printers. The printer type is acquired from the data stored in the printer type storing unit 520 in the HDD 412.

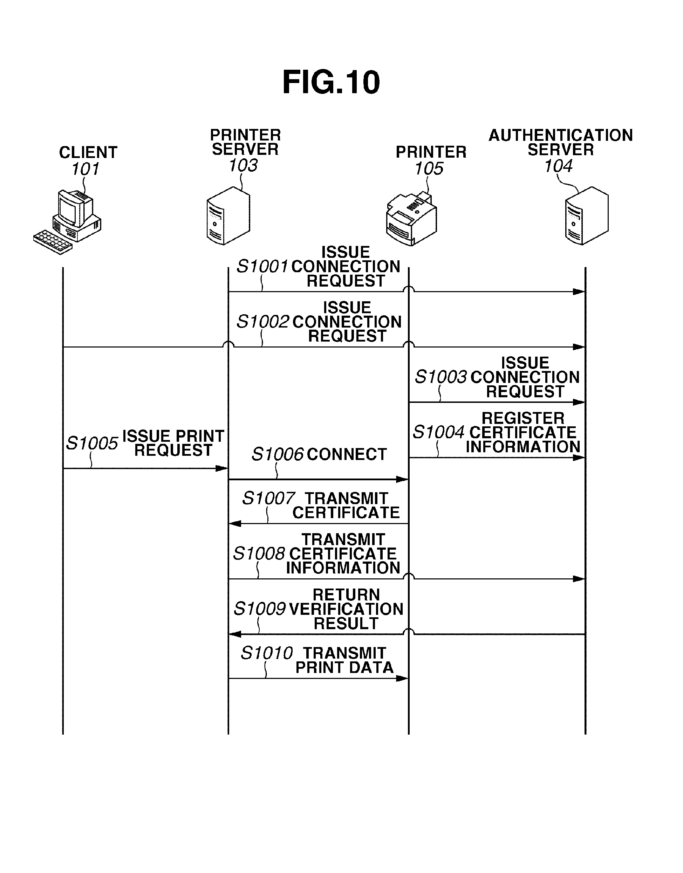

The process performed when the client 101 has instructed printing to the certificate verification system-compatible printer having a self-signed certificate will be described below with reference to Fig. 10. Further, Fig, 11 is a flowchart illustrating the internal processing performed by the printer server 103 in the printing process.

In step S1001 to step S1004 illustrated in Fig. 10, the printer driver 103, the client 101, and the printer 105 log into the AD environment, similarly as in step S701 to step S704 of the printer creation process illustrated in Fig. 7.

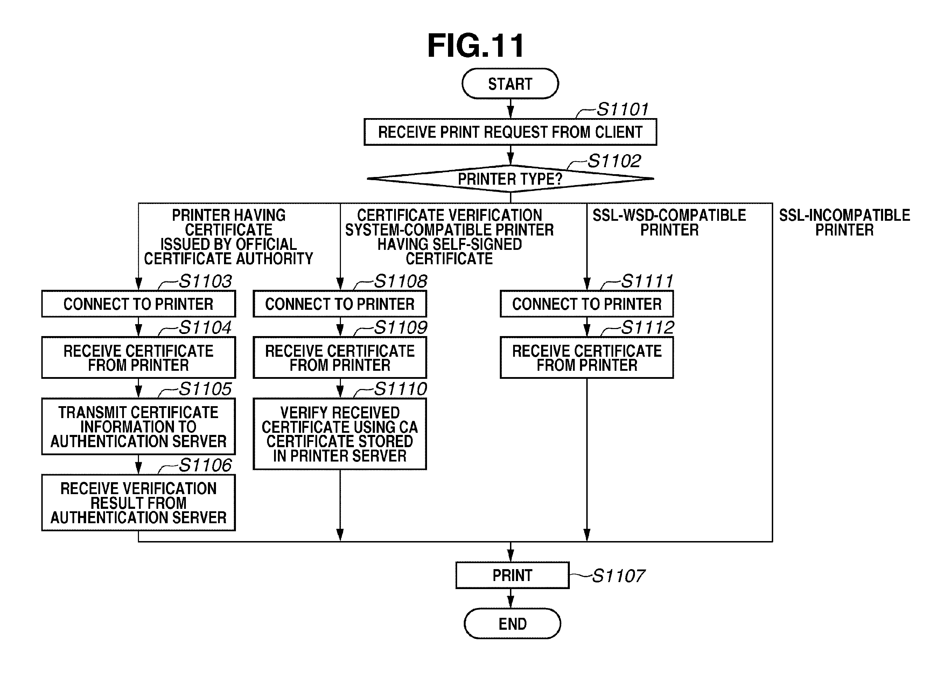

In step S1005, if the user requests printing, the client 101 transmits the print request to the printer server 103 instead of directly to the printer 105. The process performed in the printer server 103 corresponding to the process of step S1005 is as follows. In step S1101 illustrated in Fig. 11, the print request receiving unit 510 receives the print request.

The printer type determination unit 505 then acquires the data stored in the printer type storing unit 520 in the HDD 412. In step S1102, the printer type determination unit 505 confirms the printer type set when the printer was created.

In step S1006, upon receiving the print request from the client 101, the printer server 103 connects to the printer 105 identified based on the print request information.

The process performed in the printer server 103 corresponding to the process of step S1006 is as follows. In step S1103, the communication request unit 502 connects to the printer 105.

In step S1007, the printer 105 transmits to the printer server 103 the certificate to be used in the secure WSD. The printer server 103 thus receives the certificate.

The process performed in the printer server 103 corresponding to the process of step S1007 is as follows. In step S1104, the communication response receiving unit 503 receives the certificate transmitted from the printer 105.

In step S1008, upon receiving the certificate, the printer server 103 transmits to the authentication server 104 the certification information for the authentication server 104 to refer to in verifying whether the received certificate is reliable.

In step S1009, the authentication server 104 verifies whether the received certificate information matches the certificate information registered therein, and transmits the verification result as a response to the printer server 103.

The processes performed in the printer server 103 corresponding to the processes of S1008 and step S1009 are as follows. In step S1105, the authentication server transmission unit 507 transmits the certificate information to the authentication server 104 for the authentication server 104 to verify whether the received certificate is reliable.

In step S1106, the authentication server receiving unit 508 receives the verification result of whether the received certificate information matches the certificate information registered in the authentication server 104. The printer server 103 confirms the result using the authentication server verification unit 509. If verification is successful, in step S1010 illustrated in Fig. 10, the printer server 103 transmits the print data to the printer 105, and, in step S1107, the printer 105 performs printing. If the verification has failed, the process is cancelled. The process performed in the printer server 103 corresponding to the process of step S1010 is that the printing unit 511 transmits the print data to the printer, and the printer 105 performs printing.

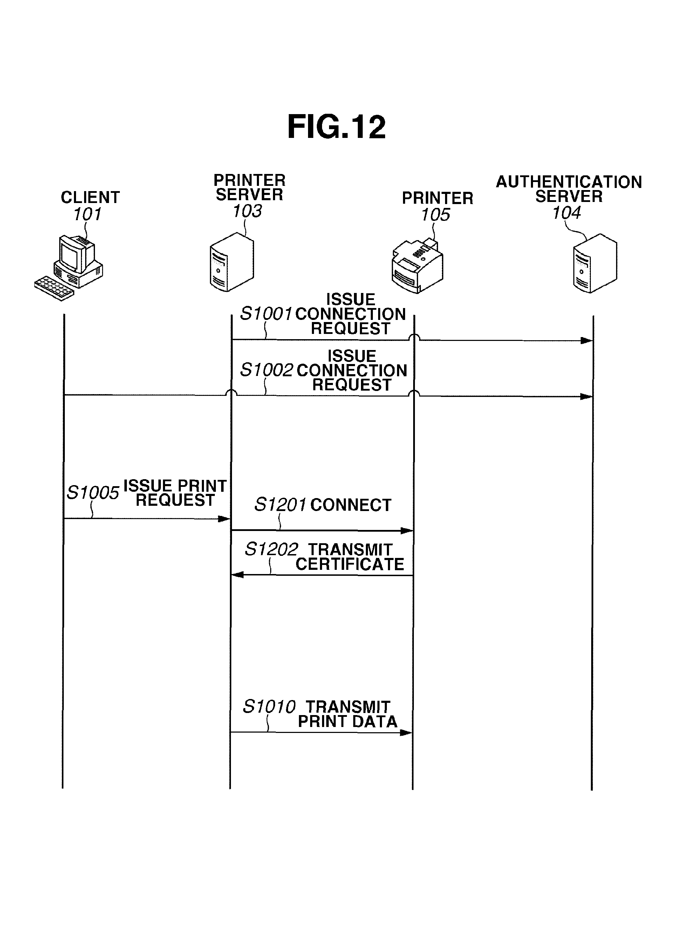

The case where the printer type is determined in step S1102 as the printer having a certificate issued by an official certificate authority will be described below with reference to Fig. 12. According to the present embodiment, the case where the printer having a certificate issued by an official certificate authority is certificate verification system-incompatible will be described below.

Since the process performed in step S1001, step S1002, and step S1005 is the same as that in the case of the certificate verification system-compatible printer having a self-signed certificate, description will be omitted. Further, since the printer is certificate verification system-incompatible, the processes for logging into and registering the certification information in the authentication server performed in step S1003 and step S1004 illustrated in Fig. 10 cannot be performed.

In step S1201 illustrated in Fig. 12, upon receiving the print request from the client 101, the printer server 103 connects to the printer 105. The process performed in step S1201 corresponds to the process of step S1108 illustrated in Fig. 11, which is performed in the printer server 103.

In step S1202, the printer 105 transmits to the printer server 103 the certificate to be used in the secure WSD. The process performed in the printer server 103 corresponding to the process of step S1202 is as follows. In step S1109 illustrated in Fig. 11, the communication response receiving unit 503 receives the certificate transmitted from the printer 105.

If the printer having a certificate issued by an official certificate authority is certificate verification system-incompatible, the certificate information of the printer 105 is not registered in the authentication server 104. In such a case, if the authentication server verification unit 509 confirms the verification result of the certificate similarly as for the certificate verification system-compatible printer having a self-signed certificate, the authentication server 104 constantly transmits the result that the certificate of the printer 105 is not registered. In step S1110, the certificate verification unit 506 thus instead determines whether the certificate received in step S1202 can be decoded using the CA certificate thereof stored in the CA certificate storing unit 521 in the HDD 412.

If verification of the certificate is successful, then in step S1010 illustrated in Fig. 10, the print data is transmitted to the printer 105, and, in step S1107, the printer performs printing.

As a result, printing can be performed using the certificate issued by an official certificate authority even when the printer 105 is certificate verification system-incompatible. The case where the printer 105 is certificate verification system-compatible will be described below.

The process performed in the case where the printer type is determined in step S1102 as the SSL-WSD-compatible printer will be described below. Since the process is similar to that of the printer having a certificate issued by an official certificate authority, the process will be described with reference to Fig. 12.

In step S1201 illustrated in Fig. 12, upon receiving the print request from the client 101, the printer server 103 connects to the printer 105. The process performed in step S1201 corresponds to the process of step S1111 illustrated in Fig. 11, in which the communication request unit 502 in the printer server 103 connects to the printer 105.

In step S1202, the printer 105 transmits to the printer server 103 the certificate to be used in the secure WSD. The process performed in the printer server 103 corresponding to the process of step S1202 is as follows. In step S1112 illustrated in Fig. 11, the communication response receiving unit 503 receives the certificate transmitted from the printer 105. In the case of the SSL-WSD-compatible printer, the verification cannot be performed using the CA certificate of the printer server 103 as determined in step S806 of the flowchart illustrated in Fig. 8. Further, the certificate information is not registered in the authentication server 104. The certificate verification process performed by the authentication server 104 is thus omitted similarly as in the case of the printer having a certificate issued by an official certificate authority. In step S1010, the printer server 103 transmits the print data to the printer, and, in step S1107, the printer 105 performs printing.

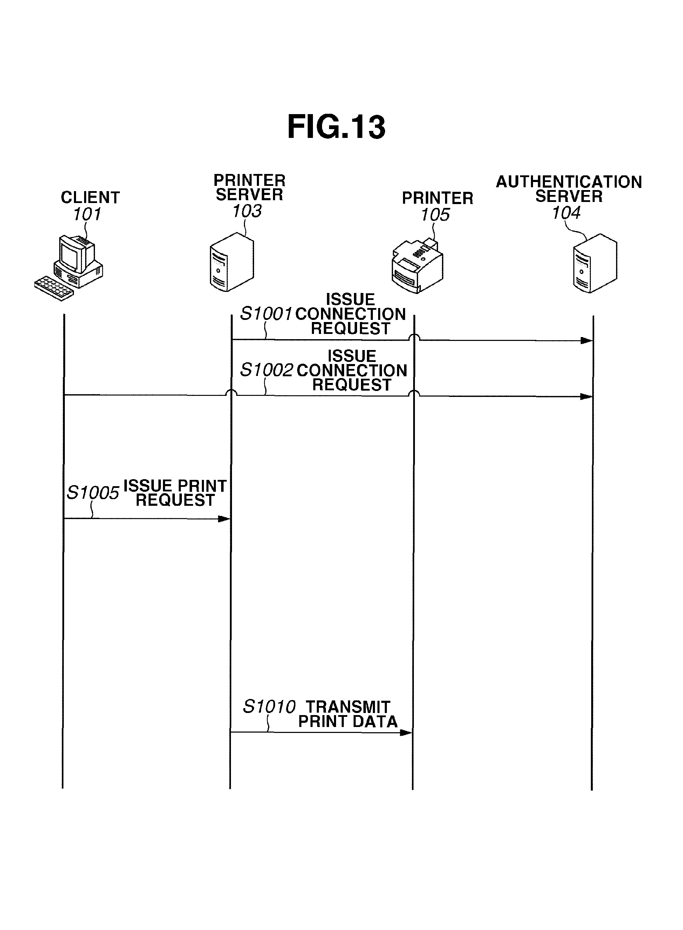

The process performed in the case where the printer type is determined in step S1102 as the SSL-incompatible printer will be described below with reference to Fig. 13.

Referring to Fig. 13, since step S1001 and step S1002 are the same as those in the case of the certificate verification system-compatible printer having a self-signed certificate, detailed description will be omitted.

The SSL-incompatible printer is SSL certificate verification system-incompatible, so that the processes of logging into the authentication server 104 in step S1003 and step S1004 and registering the certificate information in step S1004 illustrated in Fig. 10 are not performed. Further, the printer does not originally have a certificate, so that the printer server 103 cannot transmit the certificate in step S1008, and cannot transmit the verification result acquired by the authentication server in step S1009. In step S1010, the print server 103 transmits the print data to the printer 105, and the printer 105 performs printing. The process performed in step S1006 is the same as in the case of the certificate verification system-compatible printer having a self-signed certificate.

As described above, according to the present embodiment, the printer type is set to the printer, and the printing process is changed according to the printer type. As a result, printing can be performed even when the printer having a certificate issued by an official certificate authority is certificate verification system-incompatible. Further, printers such as the SSL-WSD compatible printer and the SSL-incompatible printer, which are certificate verification system-incompatible, can similarly perform printing.

Furthermore, the environment in which the printer server 103 and the authentication server 104 are separate devices will be described below. In such an environment, if the printer 105 having a certificate issued by an official certificate authority or a self-signed certificate is certificate verification system-incompatible, certificate verification fails even when the printer server 103 and the authentication server 104 communicate and verify the certificate of the printer 105. According to the present embodiment, the authentication server 104 does not verify the certificate for such a printer. As a result, a communication time and a verification time of the printer server 103 and the authentication server 104 can be omitted in the printing process of the printer, and high-speed printing can be realized, as compared to the certificate verification system-compatible printer having a self-signed certificate.

Moreover, in addition to the above, performing print processing according to the printer type enables even the SSL-incompatible printer to perform printing. As a result, since there is no SSL connection with the printer server 103, printing can be performed at higher speed by omitting the time required for performing SSL communication, as compared to the SSL-compatible printer.

A second embodiment of the present invention will be described below.

According to the first embodiment, the printer server 103 transmits to the authentication server 104 the certificate received from the printer 105. The authentication server 104 then performs verification, and returns the result.

According to the second embodiment, the printer server 103 transmits to the authentication server 104 the request to transmit the certificate information stored in the authentication server 104. The authentication server 104 then transmits the certificate information to the printer server 103. The printer server 103 compares the certificate information with the certificate received from the printer 105 and performs verification, which is different from the first embodiment.

The configuration of the network printing system according to the second embodiment will be described below with reference to Fig. 1. Since the details of the network printing system are similar to those according to the first embodiment, description will be omitted.

The process for creating the printer performed in the network printing system according to the present embodiment will be described below.

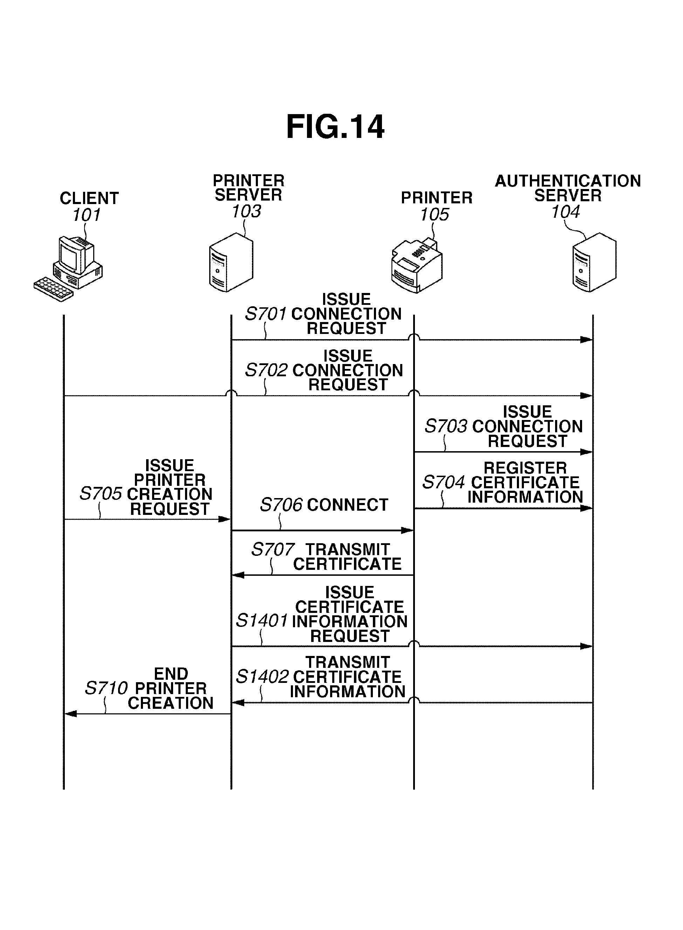

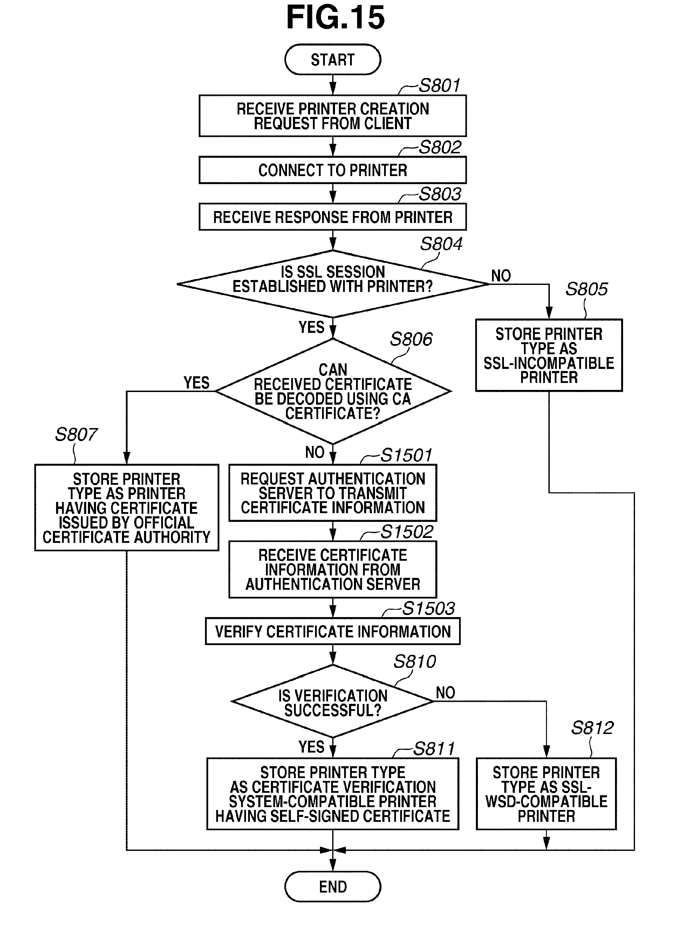

Fig. 14 is a sequence diagram illustrating the printer creation process performed in the network printing system. Fig. 15 is a flowchart illustrating the internal processing performed by the printer server 103 when creating the printer. The processes which are similar to the steps described above are assigned the same numbers as the steps described above, and description will be omitted unless otherwise stated.

If the certificate received from the printer 105 cannot be decoded using the CA certificates of the printer server 103 stored in the CA certificate storing unit 521 in the HDD 412, the process of step S1401 is performed. In step S1401, the authentication server transmission unit 507 in the printer server 103 issues a request to the authentication server 104 to transmit the certificate information to refer to in verifying whether the received certificate is reliable.

In step S1402, the authentication server 104 transmits to the printer server 103 all of the certificate information registered therein.

The processes performed in step S1401 and step S1402 correspond to the processes performed in the printer server 103 are as follows. In step S1501 illustrated in Fig. 15, the authentication server transmission unit 507 transmits to the authentication server 104 the request to transmit the certificate information. In step S1502, the authentication server receiving unit 508 receives the transmitted certificate information.

In step S1503, the authentication server verification unit 509 verifies whether the certificate received from the printer 105 is included in the certificate information received from the authentication server 104. The authentication server verification unit 509 performs the verification by sequentially comparing the certificate information similarly as in the first embodiment. The subsequent processes are the same as in the

### first embodiment.

The flow of the printing process performed in the network printing system according to the present embodiment will be described below.

According to the present embodiment, the case where the printer is the certificate verification system-compatible printer having a self-signed certificate will be described.

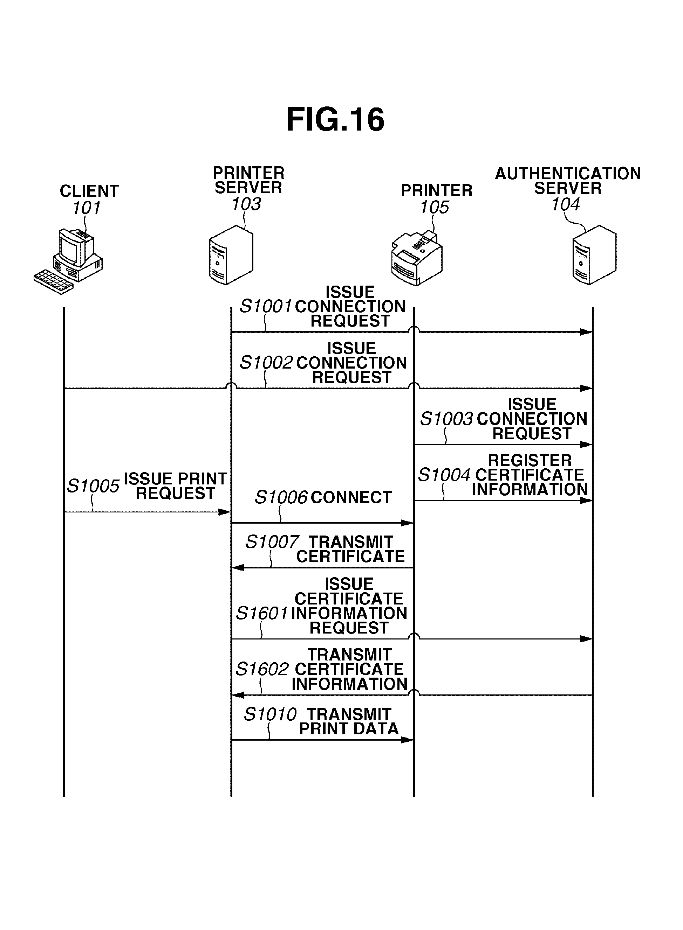

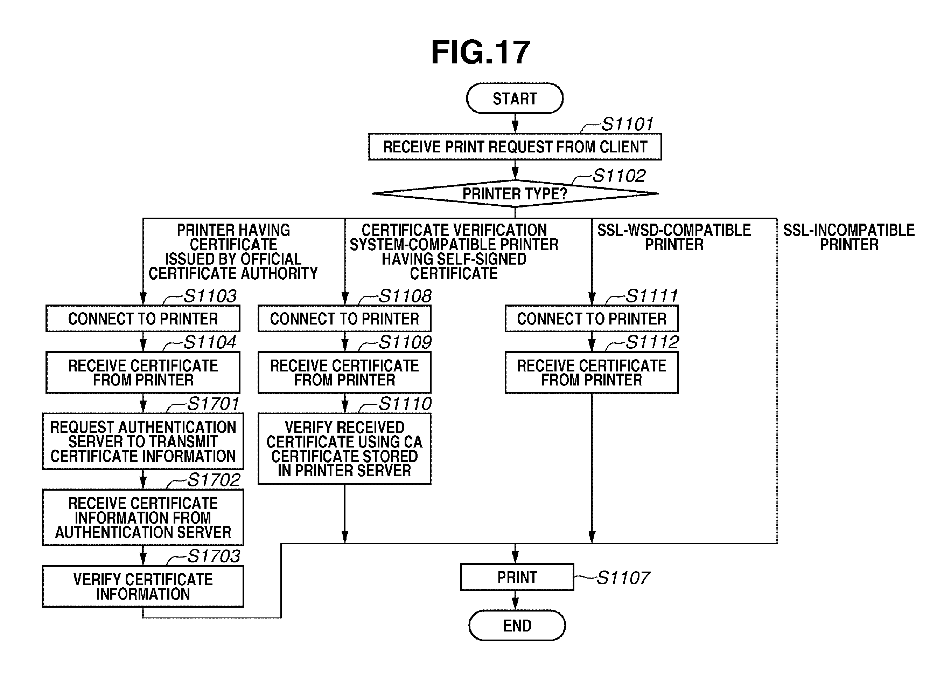

Fig. 16 is a sequence diagram illustrating the printing process performed in the network printing system. Fig. 17 is a flowchart illustrating the internal processing performed by the printer server 103 when performing printing. The processes which are similar to the steps described above are assigned the same numbers as the steps described above, and description will be omitted unless otherwise stated.

According to the present embodiment, when the printer server 103 receives the print request in step S1005 illustrated in Fig. 16, the printer type determination unit 505 acquires the data stored in the printer type storing unit 520 in the HDD 412. In step S1102 illustrated in Fig. 17, the printer type determination unit 505 thus confirms the printer type set when creating the printer. These processes are the same as in the above-described embodiment.

If the printer type determination unit 505 determines in step S1102 that the printer 105 is the certificate verification system-compatible printer having a self-signed certificate, the process of step S1601 is performed. In step S1601, the authentication server transmission unit 507 in the printer server 103 issues a request to the authentication server 104 to transmit the certificate information to refer to in verifying whether the received certificate is reliable.

In step S1602, the authentication server 104 transmits to the printer server 103 all of the certificate information registered therein.

The processes performed in step S1601 and step S1602 corresponding to the processes performed in the printer server 103 for verifying whether the received certificate is reliable are as follows. In step S1701 illustrated in Fig. 17, the authentication server transmission unit 507 transmits to the authentication server 104 the request to transmit the certificate information. In step S1702, the authentication server receiving unit 508 receives the transmitted certificate information.

In step S1703, the authentication server verification unit 509 verifies whether the certificate received from the printer 105 is included in the certificate information received from the authentication server 104. The subsequent processes are the same as those in the first embodiment.

Further, since the certificate information is not verified using the authentication server in the case of performing the printing process using the other types of printer, the process is similar to the process according to the first embodiment.

As described above, according to the present embodiment, the printer type is set to the printer, and the printing process is changed according to the printer type. As a result, printing can be performed even when the printer having a certificate issued by an official certificate authority is certificate verification system-incompatible. Further, printers such as the SSL-WSD compatible printer and the SSL-incompatible printer, which are certificate verification system-incompatible, can similarly perform printing.

Furthermore, the environment in which the printer server 103 and the authentication server 104 are separate devices will be described below. In such an environment, if the printer 105 having a certificate issued by an official certificate authority or a self-signed certificate is certificate verification system-incompatible, certificate verification fails even when the printer server 103 and the authentication server 104 communicate and verify the certificate of the printer 105. According to the present embodiment, the authentication server 104 does not verify the certificate for such a printer. As a result, the communication time and the verification time of the printer server 103 and the authentication server 104 in the printer can be omitted in the printing process, and high-speed printing can be realized as compared to the certificate verification system-compatible printer having a self-signed certificate.

Moreover, in addition to the above, performing print processing according to the printer type enables even the SSL-incompatible printer to perform printing. As a result, since there is no SSL connection with the printer server 103, printing can be performed at higher speed by omitting the time required for performing SSL communication, as compared to the SSL-compatible printer.

A case where the printer having a certificate issued by an official certificate authority is certificate verification system-compatible will be described according to the third embodiment.

According to the present embodiment, the configuration is similar to the configuration illustrated in Fig. 1, and the printer server 103 and the authentication server 104 are connected by the communication path such as the LAN. According to the above-described embodiments, the functions of the printer server and the authentication server may be installed in one device. According to the present embodiment, the printer server and the authentication server are separate devices.

The printer creation process is the same as the process illustrated in the sequence diagram of Fig. 7 and the flowchart of Fig. 8.

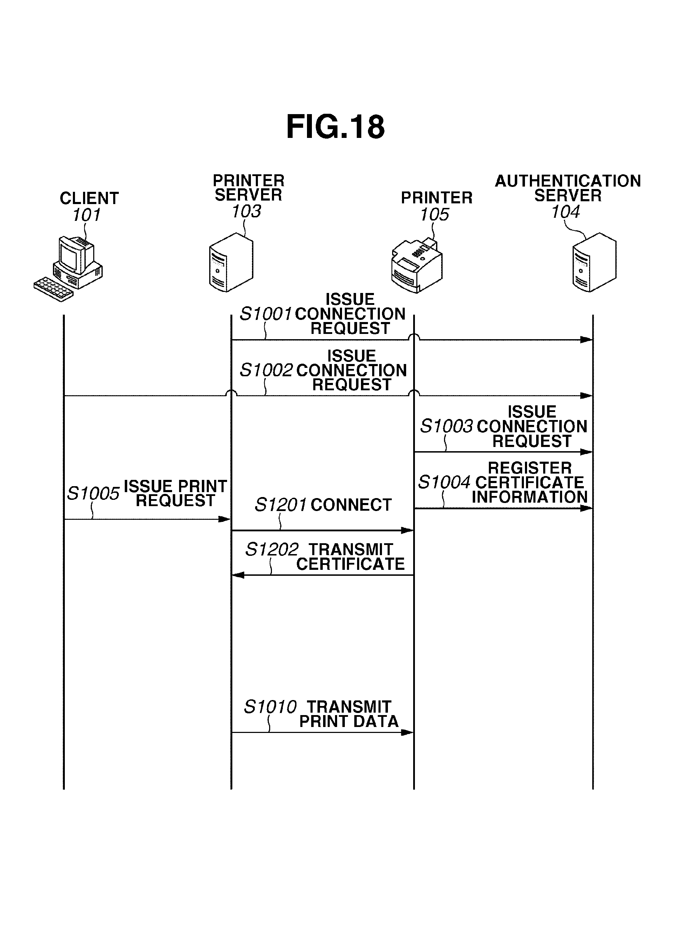

The printing process will be described below with reference to Fig. 18.

The processes which are similar to the steps described above are assigned the same numbers as the steps described above, and description will be omitted unless otherwise stated.

According to the present embodiment, the printer 105 is certificate verification system-compatible unlike in the first embodiment. In step S1003 and step S1004, the printer 105 thus logs in to and registers the certificate information in the authentication server 104.

In step S1201, upon receiving the print request from the client 101, the printer server connects to the printer 105.

The process performed in step S1201 corresponds to the process of step S1108 performed in the printer server 103 illustrated in Fig. 11, in which the communication request unit 502 connects to the printer 105.

In step S1202, the printer 105 transmits to the printer server 103 the certificate to be used in the secure WSD, and the printer server 103 receives the certificate.

The process performed in the printer server 103 corresponding to the process of step S1202 is as follows. In step S1109 illustrated in Fig. 11, the communication response receiving unit 503 receives the certificate transmitted from the printer 105.

Since the printer 105 is certificate verification system-compatible, the certificate information of the printer 105 is registered in the authentication server 104. As a result, the authentication server verification unit 509 can confirm the verification result of the certificate by the printer server 103 and the authentication server 104 communicating with each other and exchanging the certificate information. This is similar to the case of the certificate verification system-compatible printer having a self-signed certificate.

However, the certificate verification unit 506 can determine whether the certificate received in step S1202 can be decoded using the CA certificate stored in the CA certificate storing unit 521 in the HDD 412. This is similar to the case of the printer having a certificate issued by an official certificate authority according to the first and second embodiments. The certificate can thus be verified without the printer server 103 and the authentication server 104 communicating and exchanging the certificate information, or the authentication server 104 verifying the certificate, which is a necessary process for the certificate verification system. As a result, the time required for communication between the printer server 103 and the authentication server 104 and for the verification performed by the authentication server 104 can be omitted.

The process performed in step S1010 is the same as the first embodiment, so that description will be omitted.

An example in which the user has instructed printing on the SSL-WSD-compatible printer or the SSL-incompatible printer, and a security warning is issued to the user according to the present embodiment will be described below.

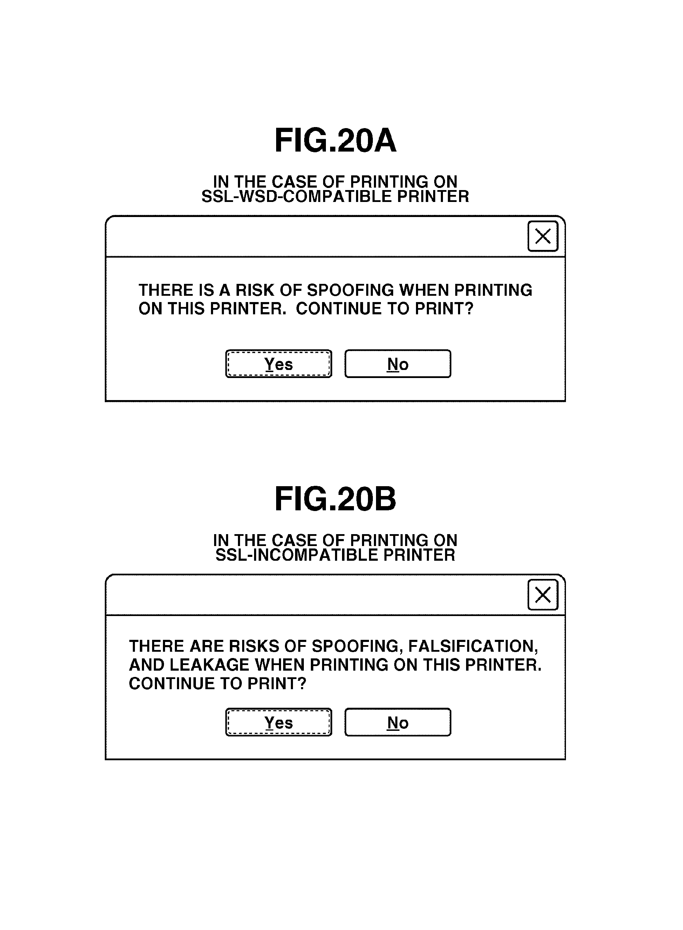

More specifically, the user instructs printing on the SSL-WSD-compatible printer or the SSL-incompatible printer. A warning as illustrated in Fig. 20A or Fig. 20B is then displayed. Fig. 20A illustrates a warning displayed in the case of the SSL-WSD-compatible printer, and Fig. 20B illustrates a warning displayed in the case of the SSL-incompatible printer.

If the printer server 103 is to display the warning, a warning information transmission unit 513 illustrated in Fig. 5 acquires the printer type from the data stored in the printer type storing unit 520 in the HDD 412. The warning information transmission unit 513 then transmits to the RAM 403 the information needed for displaying the warning on the CRT display device 411. The printer server 103 thus issues the warning based on the transmitted information.

A case where the client 101 is to display the warning when printing on the SSL-WSD-compatible printer will be described below.

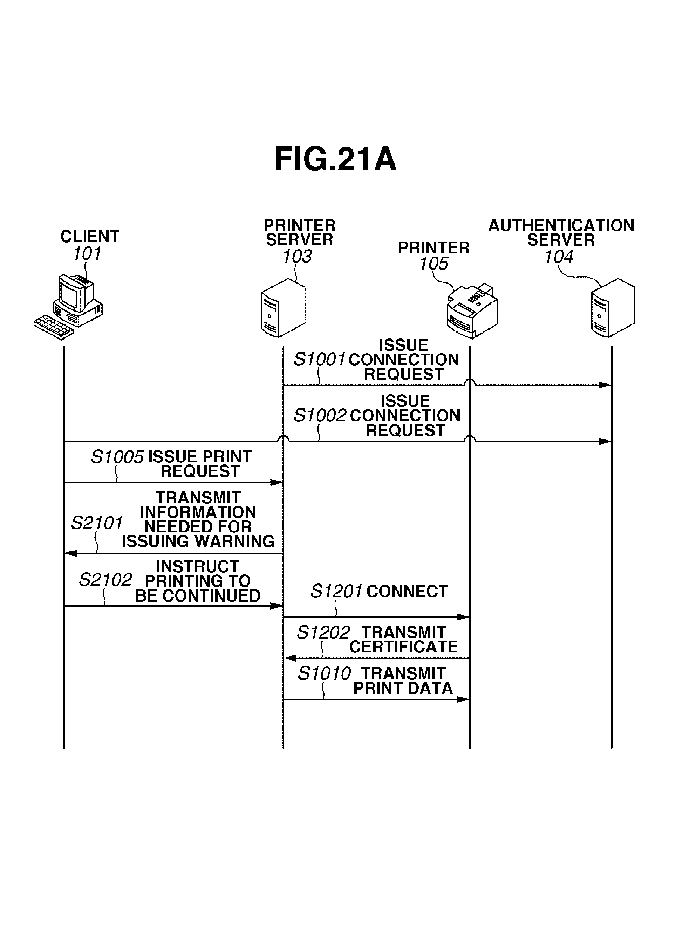

Fig. 21A is a sequence diagram illustrating the printing process when the warning is to be displayed.

The processes which are similar to the steps described above are assigned the same numbers as the steps described above, and description will be omitted unless otherwise stated.

In step S2101, the printer server 103 transmits to the client 101 the information needed for issuing the warning.

In step S2102, the client 101 transmits to the printer server 103 the instruction to continue printing after the user has recognized the warning.

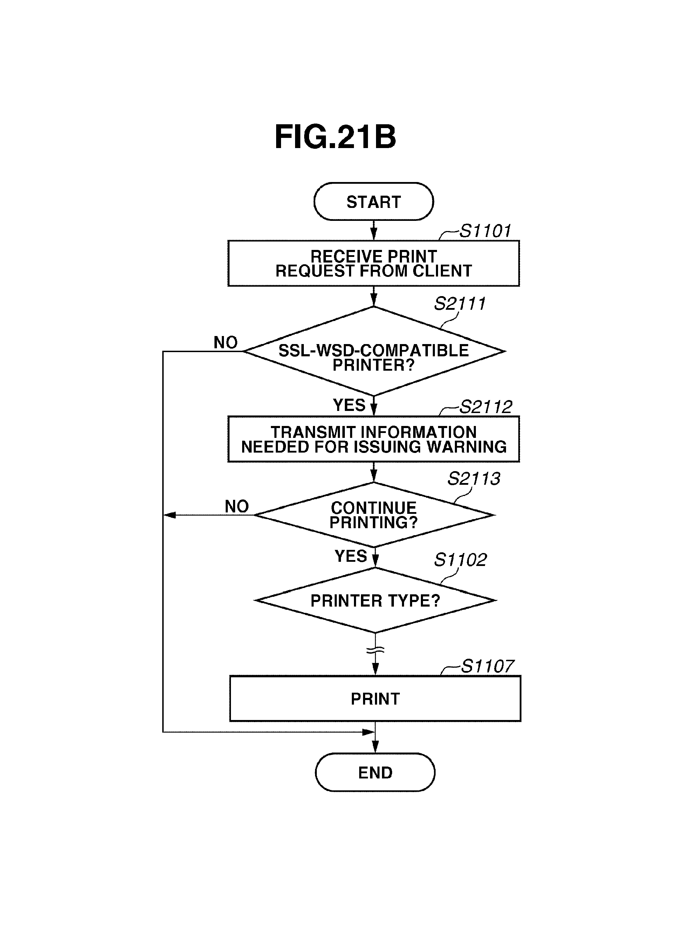

Fig. 21B is a flowchart illustrating the process performed by the printer server 103 when displaying the warning. Further, since the processes performed between step S1102 and step S1107 have been previously described, the processes are omitted in Fig. 21B.

The printer server 103 acquires from the information indicating the printer to be used in printing included in the print request received in step S1005, the printer type of the printer on which the user is to print. In step S2111, the printer server 103 determines whether the acquired printer type is the SSL-WSD-compatible printer. If the printer type is the SSL-WSD-compatible printer (YES in step S2111), the process proceeds to step S2112. If the printer type is not the SSL-WSD-compatible printer (NO in step S2111), the process ends.

In step S2112, the warning information transmission unit 513 transmits to the client 101 the information needed for issuing the warning to the user.

The information needed for issuing the warning is a warning message, or information for calling an application program interface (API) for displaying the warning message previously prepared in the client 101.

Step S2113 corresponds to step S1202 in Fig. 21A. If the client 101 instructs continuing printing (YES in step S2113), the process proceeds to step S1102. If the client 101 does not instruct continuing printing (NO in step S2113), the process ends by time out.

The case where the client 101 is to display the warning when printing on the SSL-WSD-compatible printer is as described above. The case where the client 101 is to display the warning when printing on the SSL-incompatible printer can also be realized by executing step S2101 and step S2102 illustrated in Fig. 21A in the printing process illustrated in Fig. 13. In such a case, the process performed by the printer server 103 is similar to the process illustrated in the flowchart of Fig. 21B, and the difference is step S2111, i.e., determining whether the printer type is the SSL-incompatible printer.

According to the above-described embodiments of the present invention, even a printer having a certificate issued by a certificate authority that is not included in the certificate group becomes capable of performing printing. Further, a printer having a certificate issued by a certificate authority that is included in the certificate group becomes capable of performing printing at a higher speed.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to embodiments, it is to be understood that the invention is not limited to the disclosed embodiments. The scope of the following claims is to be accorded the broadest interpretation so as to encompass all modifications, equivalent structures, and functions.

The following statements form part of the description. The claims follow these statements and are labeled as such.
1. A printer server comprising:
   receiving means configured to receive a certificate from a printer;
   CA verification means configured to verify whether the certificate received by the receiving means is a certificate issued by a certificate authority;
   acquisition means configured to acquire a verification result from a certificate group verification unit that verifies whether the certificate received by the receiving means is included in a certificate group, which is a group of certificates; and
   transmission means configured to transmit print data to the printer in a case where the certificate of the printer is not included in the certificate group, the receiving means receives the certificate from the printer, and the CA verification means verifies that the received certificate is a certificate issued by the certificate authority, and to transmit the print data to the printer in a case where the receiving means receives a self-signed certificate from the printer and the acquisition means acquires a verification result of the self-signed certificate that indicates that the self-signed certificate is included in the certificate group.
2. A printer server that communicates with an external authentication server, the printer server comprising:
   receiving means configured to receive a certificate from a printer;
   CA verification means configured to verify whether the certificate received by the receiving means is a certificate issued by a certificate authority;
   acquisition means configured to communicate with the authentication server managing a certificate group, which is a group of certificates, and to acquire a verification result from a certificate group verification unit that verifies whether the certificate received by the receiving means is included in the certificate group; and
   transmission means configured to transmit print data to the printer without acquiring a result of verifying the certificate from the acquisition means in a case where the receiving means receives the certificate from the printer, and the CA verification means verifies that the received certificate is a certificate issued by the certificate authority, and to transmit the print data to the printer in a case where the receiving means receives a self-signed certificate from the printer and the acquisition means acquires a verification result of the self-signed certificate that indicates that the self-signed certificate is included in the certificate group.
3. A printer server according to statement 1, wherein the certificate group verification unit is included in the printer server or an authentication server that communicates with the printer server.
4. A printer server according to statement 2, wherein the certificate group verification unit is included in the printer server or the authentication server.
5. A printer server according to any preceding statement, wherein the certificate group verification unit is configured to verify whether the certificate received by the receiving means is the same as a certificate included in the certificate group, or whether information for uniquely identifying a certificate based on the certificate received by the receiving means is the same as information for uniquely identifying a certificate based on a certificate included in the certificate group.
6. A printer server according to any preceding statement, further comprising:
   determination means configured to determine a printer type of the printer; and
   a storing unit capable of storing printer unique information for uniquely identifying the printer and the printer type of the printer in association with each other,
   wherein the determination means is configured to store, in the storing unit, the printer unique information of the printer and the printer type of the printer in association with each other as a printer having a certificate issued by the certificate authority in a case where the certificate of the printer received by the receiving means is a certificate issued by the certificate authority, and to store, in the storing unit, the printer unique information of the printer and the printer type of the printer in association with each other as a printer having a self-signed certificate included in the certificate group in a case where the certificate received by the receiving means is not a certificate issued by the certificate authority, the certificate group verification unit verifies the certificate, and a result of verifying the certificate by the certificate group verification unit acquired by the acquisition means indicates that the certificate of the printer is included in the certificate group.
7. A printer server according to statement 6, wherein the transmission means is configured to transmit the print data to the printer in a case where the determination means determines that the printer is a printer having a self-signed certificate that is not included in the certificate group, and to transmit the print data to the printer in a case where the determination means determines that the printer is a printer having no certificate.
8. A printer server according to statement 7, wherein the determination means is configured to store, in the storing unit, the printer unique information of the printer and the printer type of the printer in association with each other as a printer having a self-signed certificate that is not included in the certificate group in case where the certificate received by the receiving means is not a certificate issued by the certificate authority, the certificate group verification unit verifies the certificate, and a result of verifying the certificate by the certificate group verification unit acquired by the acquisition means indicates that the certificate of the printer is not included in the certificate group, and to store, in the storing unit, the printer unique information of the printer and the printer type of the printer in association with each other as a printer having no certificate in a case where the printer server communicates with the printer and SSL session cannot be established between the printer and the printer server.
9. A printer server according to any preceding statement, further comprising display information transmission means configured to transmit information for displaying, according to the printer type of the printer, an operation unit that receives from a user an operation related to the printer.
10. A printer server according to statement 9, wherein the display information transmission means is configured to transmit information for displaying, on the operation unit, the printer type of the printer, or an icon or a secure level according to the printer type of the printer.
11. A printer server according to any one of statement 7 to 10, further comprising warning information transmission means configured to transmit information for warning a user in a case where the determination means determines that the printer is a printer having a self-signed certificate that is not included in the certificate group, or in a case where the determination means determines that the printer is a printer having no certificate.
12. A method for controlling a printer, the method comprising:
   receiving a certificate from the printer;
   verifying whether the received certificate is a certificate issued by a certificate authority;
   acquiring a verification result from a certificate group verification unit that verifies whether the received certificate is included in a certificate group, which is a group of certificates;
   transmitting print data to the printer in a case where the certificate of the printer is not included in the certificate group, the certificate is received from the printer, and it is verified that the received certificate is a certificate issued by the certificate authority; and
   transmitting the print data to the printer in a case where a self-signed certificate is received from the printer and the verification result of the self-signed certificate indicates that the self-signed certificate is included in the certificate group.
13. A method for controlling a printer that communicates with an external authentication server, the method comprising:
   receiving a certificate from the printer;
   verifying whether the received certificate is a certificate issued by a certificate authority;
   communicating with the authentication server managing a certificate group, which is a group of certificates, and acquiring a verification result from a certificate group verification unit that verifies whether the received certificate is included in the certificate group;
   transmitting print data to the printer without acquiring a result of verifying the certificate in a case where the certificate is received from the printer, and it is verified that the received certificate is a certificate issued by the certificate authority; and
   transmitting the print data to the printer in a case where a self-signed certificate is received from the printer and the verification result of the self-signed certificate indicates that the self-signed certificate is included in the certificate group.
14. A computer-readable medium storing a program that causes a computer to perform a method comprising:
   receiving a certificate from the printer;
   verifying whether the received certificate is a certificate issued by a certificate authority;
   acquiring a verification result from a certificate group verification unit that verifies whether the received certificate is included in a certificate group, which is a group of certificates;
   transmitting print data to the printer in a case where the certificate of the printer is not included in the certificate group, the certificate is received from the printer, and it is verified that the received certificate is a certificate issued by the certificate authority; and
   transmitting the print data to the printer in a case where a self-signed certificate is received from the printer and the verification result of the self-signed certificate indicates that the self-signed certificate is included in the certificate group.
15. A computer-readable medium storing a program that causes a computer to perform a method for controlling a printer that communicates with an external authentication server, the method comprising:
   receiving a certificate from the printer;
   verifying whether the received certificate is a certificate issued by a certificate authority;
   communicating with the authentication server managing a certificate group, which is a group of certificates, and acquiring a verification result from a certificate group verification unit that verifies whether the received certificate is included in the certificate group;
   transmitting print data to the printer without acquiring a result of verifying the certificate in a case where the certificate is received from the printer, and it is verified that the received certificate is a certificate issued by the certificate authority; and
   transmitting the print data to the printer in a case where a self-signed certificate is received from the printer and the verification result of the self-signed certificate indicates that the self-signed certificate is included in the certificate group.

## Claims

1. A printer server (103) comprising:
receiving means configured to receive a certificate from a printer;
verification means (507, 508, 509) configured to verify whether the certificate received by the receiving means is a certificate issued by a certificate authority;
acquisition means configured to acquire a verification result from a certificate group verification unit (521) that verifies whether the certificate received by the receiving means is included in a certificate group, which is a group of certificates; and
transmission means configured to transmit print data to the printer (105-108) in a first case where the certificate of the printer is not included in the certificate group, the receiving means receives the certificate from the printer, and the verification means verifies that the received certificate is a certificate issued by the certificate authority, and to transmit the print data to the printer in a second case where the receiving means receives a self-signed certificate from the printer and the acquisition means acquires a verification result of the self-signed certificate that indicates that the self-signed certificate is included in the certificate group.

2. The print server (103) according to claim 1 configured to communicate with an authentication server that manages the certificate group, and, in which the transmission means, in the first case, is configured to transmit print data to the printer without acquiring a result of verifying the certificate at the authentication server.

3. The printer server according to claim 1 or claim 2, wherein the certificate group verification unit is included in the printer server (103) or an authentication server (104) that communicates with the printer server.

4. The printer server (103) according to any preceding claim, wherein the certificate group verification unit is configured to verify whether the certificate received by the receiving means is the same as a certificate included in the certificate group, or whether information for uniquely identifying a certificate based on the certificate received by the receiving means is the same as information for uniquely identifying a certificate based on a certificate included in the certificate group.

5. The printer server (103) according to any preceding claim, further comprising:
determination means (505) configured to determine a printer type of the printer; and
a storing unit capable of storing printer unique information for uniquely identifying the printer and the printer type of the printer in association with each other,
wherein the determination means (505) is configured to store, in the storing unit, the printer unique information of the printer and the printer type of the printer in association with each other as a printer having a certificate issued by the certificate authority in a case where the certificate of the printer received by the receiving means is a certificate issued by the certificate authority, and to store, in the storing unit, the printer unique information of the printer and the printer type of the printer in association with each other as a printer having a self-signed certificate included in the certificate group in a case where the certificate received by the receiving means is not a certificate issued by the certificate authority, the certificate group verification unit verifies the certificate, and a result of verifying the certificate by the certificate group verification unit acquired by the acquisition means indicates that the certificate of the printer is included in the certificate group.

6. The printer server (103) according to claim 5, wherein the transmission means is configured to transmit the print data to the printer (105 - 108) in a case where the determination means determines that the printer is a printer having a self-signed certificate that is not included in the certificate group, and to transmit the print data to the printer in a case where the determination means determines that the printer is a printer having no certificate.

7. The printer server according to claim 6, wherein the determination means is configured to store, in the storing unit, the printer unique information of the printer and the printer type of the printer in association with each other as a printer having a self-signed certificate that is not included in the certificate group in case where the certificate received by the receiving means is not a certificate issued by the certificate authority, the certificate group verification unit verifies the certificate, and a result of verifying the certificate by the certificate group verification unit acquired by the acquisition means indicates that the certificate of the printer is not included in the certificate group, and to store, in the storing unit, the printer unique information of the printer and the printer type of the printer in association with each other as a printer having no certificate in a case where the printer server communicates with the printer and SSL session cannot be established between the printer and the printer server.

8. The printer server (103) according to any preceding claim, further comprising display information transmission means (512) configured to transmit information for displaying, according to the printer type of the printer, a display (Fig. 9) for receiving from a user an operation related to the printer.

9. The printer server (103) according to claim 8, wherein the display information transmission means (512) is configured to transmit, in the display, the printer type of the printer, or an icon or a secure level according to the printer type of the printer.

10. The printer server (103) according to any one of claims 6 to 9, further comprising warning information transmission means configured to transmit information for warning a user (Fig. 20a and 20b) in a case where the determination means determines that the printer is a printer having a self-signed certificate that is not included in the certificate group, or in a case where the determination means determines that the printer is a printer having no certificate.

11. A method for controlling a printer (105-108), the method comprising:
receiving a certificate from the printer;
verifying whether the received certificate is a certificate issued by a certificate authority;
acquiring a verification result from a certificate group verification unit (521) that verifies whether the received certificate is included in a certificate group, which is a group of certificates;
transmitting print data to the printer in a first case where the certificate of the printer is not included in the certificate group, the certificate is received from the printer, and it is verified that the received certificate is a certificate issued by the certificate authority; and
transmitting the print data to the printer in a second case where a self-signed certificate is received from the printer and the verification result of the self-signed certificate indicates that the self-signed certificate is included in the certificate group.

12. A program that causes a computer to perform the method according to claim 11.

13. A storage medium storing the program according to claim 12.
